# FASCICULE DE BREVET EUROPEEN

(11) **EP 3 023 996 B1**
(45) Date de publication et mention de la délivrance du brevet: **21.06.2017**
(21) Numéro de dépôt: 15194355.2
(22) Date de dépôt: 12.11.2015
(51) Int. Cl.: H01B 3/56, H01H 33/02, H02B 13/045, H01B 3/40, H01B 3/42

(54) **APPAREIL ÉLECTRIQUE À ISOLATION ÉLECTRIQUE ET EXTINCTION D'ARCS ÉLECTRIQUES AMÉLIORÉES ET PROCÉDÉ ASSOCIÉ**
ELEKTROGERÄT MIT VERBESSERTER ELEKTRISCHER ISOLATION UND LÖSCHUNG DER LICHTBÖGEN, UND ENTSPRECHENDES VERFAHREN
ELECTRICAL DEVICE WITH IMPROVED ELECTRICAL ISOLATION AND ELECTRICAL ARC SUPPRESSION AND ASSOCIATED METHOD

(30) Priorité: 19.11.2014 FR 1461189
(43) Date de publication de la demande: 25.05.2016
(73) Titulaire: Schneider Electric Industries SAS, 92500 Rueil-Malmaison (FR)
(72) Inventeur: PICCOZ, Daniel, 38050 GRENOBLE CEDEX 9 (FR); MALADEN, Romain, 38050 GRENOBLE CEDEX 9 (FR); LIU, Yu-Derek, 38050 GRENOBLE CEDEX 9 (FR)
(74) Mandataire: Brevalex

(56) Documents cités:
- WO-A1-2014/037566
- US-A1- 2014 190 726
- DATABASE WPI Week 199001 Thomson Scientific, London, GB; AN 1990-004781 XP002741506, & JP H01 289015 A (TOSOH CORP) 21 novembre 1989 (1989-11-21)

## Description

### DOMAINE TECHNIQUE

La présente invention se rapporte au domaine de l'isolation électrique et de l'extinction des arcs électriques dans des appareils électriques, en particulier dans les appareils électriques dits "moyenne tension".

Plus précisément, l'invention se rapporte à un appareil électrique doté d'une enceinte étanche qui contient un milieu gazeux comme milieu d'isolation électrique et d'extinction des arcs électriques qui seraient susceptibles de s'y former.

Cet appareil électrique peut notamment être un transformateur électrique tel qu'un transformateur d'alimentation ou de mesure, une ligne à isolation gazeuse pour le transport ou la distribution de l'électricité, un jeu de barres ou encore un appareil électrique de connexion/déconnexion (aussi appelé appareil de coupure) tel qu'un disjoncteur, un interrupteur, un combiné interrupteur-fusibles, un sectionneur, un sectionneur de mise à la terre ou un contacteur.

L'invention se rapporte également à un procédé pour améliorer l'isolation électrique d'un appareil électrique.

### ÉTAT DE LA TECHNIQUE ANTÉRIEURE

Dans les appareils électriques, et notamment les appareils électriques moyenne tension, l'isolation électrique et l'extinction des arcs électriques susceptibles de se former sont typiquement assurées par un milieu gazeux qui est confiné à l'intérieur de ces appareils électriques. Ce milieu gazeux est plus particulièrement confiné dans une enceinte étanche, enceinte étanche dans laquelle se trouvent également au moins un composant électriquement isolant et des composants électriques.

Dans ce qui précède et ce qui suit, l'expression "moyenne tension" est utilisée dans son acceptation habituelle, à savoir que l'expression "moyenne tension" désigne une tension qui est supérieure ou égale à 1 000 V en courant alternatif et à 1500 V en courant continu mais qui ne dépasse pas 52 000 V en courant alternatif et 75 000 V en courant continu.

Actuellement, le milieu gazeux le plus souvent utilisé dans ce type d'appareils électriques est l'hexafluorure de soufre SF₆ et ce, en raison des propriétés physiques exceptionnelles de ce gaz, parmi lesquelles une rigidité diélectrique relativement haute due au caractère électronégatif de la molécule ainsi qu'une bonne conductivité thermique. Ce gaz présente, par ailleurs, une bonne stabilité chimique et n'est, de surcroît, pas toxique.

Toutefois, le SF₆ présente l'inconvénient majeur d'être un gaz à effet de serre très puissant. Le SF₆ a, en effet, un potentiel de réchauffement global (PRG) de 22800 : à titre de comparaison, 1 kg de SF₆ a le même impact sur l'effet de serre que 22,8 tonnes de CO₂.

En conséquence, et bien que les appareils électriques à SF₆ répondent, à ce jour, totalement aux attentes de l'industrie en termes de compacité, de fiabilité, de sécurité des personnes ou encore de durée de service, la mise en oeuvre d'un tel gaz dans les appareils électriques, pour des raisons environnementales évidentes, doit être limitée, étant précisé qu'il se pourrait que sa mise en oeuvre soit interdite à moyen terme.

Pour limiter la mise en oeuvre du SF₆ et anticiper son éventuelle interdiction, il a déjà été proposé de remplacer le SF₆ par différents gaz qui, tout en ayant de bonnes propriétés d'isolation électrique et d'extinction des arcs électriques, aient un impact sur l'environnement faible ou nul et ne soit, par ailleurs, pas toxique.

Parmi les alternatives au SF₆, le document US 2014/0190726, référencé **[1]** ci-après dans la présente description, propose d'utiliser, comme milieu gazeux, un mélange comprenant une fluorocétone et un gaz de dilution, la fluorocétone étant présente dans le mélange dans une proportion molaire déterminée.

Plus particulièrement, dans le document **[1]**, la fluorocétone mise en oeuvre est la décafluoro-2-méthylbutan-3-one, qui répond à la formule brute C₅F₁₀O et est couramment désignée par l'abréviation "C5K". Le gaz de dilution peut, quant à lui, être choisi parmi l'air, l'azote, le protoxyde d'azote, le dioxyde de carbone, les mélanges de dioxyde de carbone et d'oxygène dans un rapport volumique allant de 90/10 à 97/3, et les mélanges de ces différents gaz.

La mise en oeuvre du mélange décrit dans le document **[1]**, et en particulier d'un mélange C5K-air, permet d'atteindre des valeurs de rigidité diélectrique comparables à celles conférées par le SF₆, et donc de constituer un milieu gazeux d'isolation électrique et d'extinction des arcs électriques susceptibles de se former, tout à fait satisfaisant.

On observe toutefois que la mise en oeuvre d'un milieu gazeux, tel que celui enseigné dans le document **[1]**, engendre une baisse de la tenue diélectrique en surface des composants électriquement isolants agencés dans l'enceinte étanche, par rapport à celle obtenue avec la mise en oeuvre de SF₆. Cette baisse de la tenue diélectrique en surface a pour conséquence de propager un arc électrique selon un trajet de cheminement le long de la surface desdits composants électriquement isolants à une valeur de différence de potentiels inférieure à celle obtenue lorsque du SF₆ est mis en oeuvre.

Pour remédier à cette baisse de la tenue diélectrique en surface des composants électriquement isolants et, par conséquent, atteindre des valeurs d'isolation électrique, pour les appareils électriques correspondants, qui soient comparables à celles conférées par le SF₆, une solution consiste à accroître les dimensions des différentes pièces constitutives de ces appareils électriques.

Toutefois, un tel accroissement des dimensions conduirait rapidement à concevoir des appareils électriques encombrants dont le coût serait prohibitif. En outre, une telle solution irait à l'encontre des efforts réalisés au cours de ces dernières décennies pour développer des appareils électriques compacts, dont l'encombrement est de plus en plus réduit.

Le but de la présente invention est donc de pallier les inconvénients de l'art antérieur et de proposer un appareil électrique, notamment un appareil électrique moyenne tension, qui présente des propriétés d'isolation électrique et d'extinction des arcs électriques susceptibles de se former, comparables à celles d'un appareil électrique à SF₆, sans l'inconvénient de la mise en oeuvre de ce SF₆ au regard des exigences environnementales.

L'appareil électrique selon l'invention doit, plus particulièrement, présenter une tenue diélectrique en surface des composants électriquement isolants comparable à celle d'un appareil électrique à SF₆ et ce, en l'absence de tout accroissement notable des dimensions dudit appareil électrique, voire en étant fabriqué avec les pièces telles que disponibles à ce jour pour la fabrication de ces appareils électriques.

Un autre but de l'invention est de proposer un appareil électrique qui ne se limite pas à la mise en oeuvre d'un milieu gazeux qui permette d'atteindre des valeurs d'isolation électrique comparables à celles que l'on obtient avec le SF₆. Un tel appareil électrique doit présenter une tenue diélectrique en surface des composants électriquement isolants améliorée tout en mettant en oeuvre d'autres milieux gazeux connus et utilisés à ce jour comme milieu d'isolation électrique et d'extinction des arcs électriques susceptibles de se former. Comme précédemment, cette amélioration des performances d'un tel appareil électrique doit être obtenue, en l'absence de tout accroissement notable des dimensions dudit appareil électrique, cet appareil électrique étant avantageusement fabriqué avec les pièces disponibles à ce jour pour la fabrication de ces appareils électriques.

Un autre but de l'invention est de proposer un appareil électrique qui ne soit pas limité au seul domaine de la moyenne tension tel que défini ci-dessus, mais qui puisse également être envisagé en dehors de ce domaine de la moyenne tension, et notamment dans le domaine de la basse tension, l'expression "basse tension" désignant une tension qui est inférieure à 1000 V en courant alternatif et à 1500 V en courant continu.

### EXPOSÉ DE L'INVENTION

Ces buts, ainsi que d'autres, sont atteints, en premier lieu, par un appareil électrique du type précité, c'est-à-dire un appareil électrique comprenant une enceinte étanche dans laquelle se trouvent, au moins un composant électriquement isolant, des composants électriques ainsi qu'un milieu gazeux assurant l'isolation électrique et l'extinction des arcs électriques susceptibles de se former au sein de cette enceinte étanche.

Selon l'invention, la surface dudit au moins un composant électriquement isolant est revêtue d'une couche continue constituée d'atomes de fluor.

Les inventeurs ont, en effet, constaté que, de manière inattendue et surprenante, la tenue diélectrique en surface d'un composant électriquement isolant est améliorée lorsque la surface de ce dernier est revêtue d'une couche continue constituée d'atomes de fluor par rapport à celle d'un composant électriquement isolant de référence dont la surface en serait dépourvue et ce, à dimensions identiques de l'ensemble des pièces constitutives des appareils électriques correspondants. Cette amélioration de la tenue diélectrique en surface est significative et peut être évaluée à au moins 10%, avantageusement à au moins 15% et, préférentiellement, à au moins 20% de celle mesurée pour un appareil électrique de référence.

À cette amélioration de la tenue diélectrique en surface d'un tel composant électriquement isolant, qui permet de limiter le cheminement de l'arc électrique au niveau de ladite surface, s'ajoute également une amélioration notable en termes de coupure d'arc électrique proprement dite. En effet, lors du contact d'un arc électrique au niveau de sa surface, qui est revêtue d'une couche continue constituée d'atomes de fluor, le composant électriquement isolant va libérer des atomes de fluor. Ces atomes de fluor vont alors absorber une partie de l'énergie de cet arc électrique et, ainsi, contribuer à l'extinction dudit arc électrique.

Comme indiqué ci-dessus, l'appareil électrique selon l'invention comprend au moins un composant électriquement isolant dont la surface est revêtue d'une couche continue constituée d'atomes de fluor.

Sachant qu'un appareil électrique comprend généralement plusieurs composants électriquement isolants, on peut envisager qu'un seul de ces composants électriquement isolants ait sa surface revêtue de cette couche continue constituée d'atomes de fluor. De manière avantageuse, ce seul composant électriquement isolant est le composant électriquement qui se trouve être le plus susceptible de propager un arc électrique selon un trajet de cheminement le long de sa surface, notamment en raison de sa proximité avec la zone dans laquelle est susceptible de se former ledit arc électrique.

Mais on peut également envisager que deux, trois, voire plus, composants électriquement isolants d'un appareil électrique, ou encore que tous les composants électriquement isolants d'un appareil électrique, aient leur surface respective revêtue d'une couche continue constituée d'atomes de fluor.

De nombreux matériaux peuvent être envisagés pour réaliser le ou les composants électriquement isolants. Ce ou ces composants électriquement isolants peuvent notamment être réalisés en un matériau comprenant au moins un polymère choisi parmi un polymère thermodurcissable, un polymère thermoplastique et un élastomère, ce polymère pouvant être seul ou en mélange sous la forme d'un alliage.

Dans une première variante de l'invention, lorsque le polymère du matériau du composant électriquement isolant est un polymère thermodurcissable, ce polymère peut être choisi parmi les polyépoxydes, les polyesters insaturés et les polyuréthanes.

Dans une deuxième variante de l'invention, lorsque le polymère du matériau du composant électriquement isolant est un polymère thermoplastique, ce polymère peut être choisi parmi les polyesters linéaires, les polyamides (ou PA), les polycarbonates (ou PC) et les polyacétals.

Parmi les polyesters linéaires, on peut notamment citer le polybutylène téréphtalate (ou PBT).

Parmi les polyacétals, on peut notamment citer le polyoxyméthylène (ou POM).

Dans le cas où le choix du polymère thermoplastique se porte sur les polyamides, ce polymère peut avantageusement être un polyamide dit "haute performance", en particulier un polyphtalamide (ou PPA), en raison de ses excellentes propriétés mécaniques et de résistance aux hautes températures.

Dans une troisième variante de l'invention, lorsque le polymère du matériau du composant électriquement isolant est un élastomère, ce dernier peut être choisi parmi les silicones et les terpolymères éthylène-propylène-diène (ou EPDM).

Le matériau du composant électriquement isolant peut, en outre, comprendre des renforts et ce, quelle que soit la nature du polymère mis en oeuvre dans ce matériau, que ce polymère soit thermoplastique, thermodurcissable ou un élastomère.

Ces renforts peuvent être constitués par des fibres, qui peuvent être organiques ou minérales. Parmi les fibres minérales, on peut citer les fibres de verre. Parmi les fibres organiques, on peut citer les fibres polymériques, telles que les fibres de polyester ou d'aramide.

Dans une version avantageuse de l'invention, les fibres sont des fibres de verre.

Ces renforts peuvent également être constitués par des charges, ces charges pouvant également être organiques ou minérales. Parmi les charges minérales, on peut, avantageusement, citer les charges de dioxyde de silicium SiO₂ ou silice.

Rien n'interdit d'envisager que ces renforts soient constitués par des mélanges desdites fibres et desdites charges.

Comme indiqué précédemment, l'isolation électrique et l'extinction des arcs électriques, qui sont susceptibles de se former au sein de l'enceinte étanche de l'appareil électrique selon l'invention, sont assurées par un milieu gazeux.

Ce milieu gazeux peut être choisi parmi l'ensemble des milieux gazeux connus et utilisés à ce jour comme milieu d'isolation électrique et d'extinction des arcs électriques susceptibles de se former.

On pourrait, notamment, choisir de l'hexafluorure de soufre SF₆ comme milieu gazeux et, ce faisant, observer une amélioration des performances d'isolation électrique de l'appareil électrique correspondant.

Toutefois, dans un souci évident de limitation de l'impact du milieu gazeux sur l'environnement, ce milieu gazeux comprend un ou plusieurs gaz à effet de serre en une quantité qui soit la plus limitée possible. De préférence, ce milieu gazeux est exempt d'hexafluorure de soufre SF₆.

Ce milieu gazeux peut avantageusement être choisi parmi le dioxyde de carbone CO₂ mais aussi l'air et le diazote N₂, ces deux derniers gaz n'ayant pas d'impact négatif sur l'environnement.

Ce milieu gazeux peut également être avantageusement choisi parmi différents mélanges gazeux, ces mélanges gazeux comprenant au moins un composé choisi parmi une fluorocétone, une hydrofluorooléfine et un fluoronitrile, le cas échéant, en mélange avec un gaz de dilution.

Un tel milieu gazeux peut ainsi comprendre une fluorocétone et un gaz de dilution.

La fluorocétone est plus particulièrement une cétone à chaîne carbonée à cinq atomes de carbone, de préférence totalement substituée par du fluor, qui n'est pas toxique, pas corrosive, pas explosive, qui se dégrade très rapidement dans l'atmosphère en raison de la sensibilité aux ultraviolets que présente la double liaison du groupe cétone C=O et qui a un PRG proche de 1.

Dans une variante plus particulièrement avantageuse de l'invention, la fluorocétone présente dans le milieu gazeux est la décafluoro-2-méthylbutan-3-one, ou C5K, qui a été décrite dans le document **[1]**. En effet, un tel milieu gazeux, qui comprend la fluorocétone C5K et un gaz de dilution, présente des caractéristiques de rigidité diélectrique comparables à celles du SF₆.

On pourra ainsi se reporter audit document **[1]** pour ce qui concerne plus particulièrement les conditions relatives au milieu gazeux comprenant la fluorocétone C5K et, notamment, son pourcentage molaire d'au moins 95% du pourcentage molaire M tel que déterminé par la formule (I) définie, notamment dans les paragraphes [0026] à [0030] du document **[1]**.

Comme également enseigné dans le document **[1]**, le gaz de dilution peut être choisi parmi l'air, l'azote, le protoxyde d'azote, le dioxyde de carbone, les mélanges de dioxyde de carbone et d'oxygène dans un rapport volumique allant de 90/10 à 97/3, et les mélanges de ces différents gaz. Ce gaz de dilution est avantageusement l'air.

Ce milieu gazeux peut également comprendre une hydrofluorooléfine, seule ou en mélange avec un gaz de dilution, comme décrit dans le document US 2014/0196932, référencé **[2]** ci-après.

L'hydrofluorooléfine est plus particulièrement un alcène fluoré de chaîne carbonée à trois éléments carbone, et de préférence de type C₃H₂F₄, qui n'est pas toxique, pas corrosif, pas explosif, a un potentiel de destruction de l'ozone (en anglais "Ozone Depletion Potential" ou ODP) de 0, un PRG inférieur à 10, et est doté de propriétés diélectriques aptes à lui permettant d'avantageusement remplacer le SF₆ comme gaz d'isolation et/ou d'extinction des arc électriques.

L'hydrofluorooléfine peut notamment être le *trans*-1,3,3,3-tétrafluoro-1-propène (HFO-1234ze) ou le 2,3,3,3-tétrafluoro-1-propène (HFO-1234yf), chacun de ces composé pouvant être utilisé seul, ou en mélange avec un gaz de dilution.

On pourra ainsi se reporter audit document **[2]** pour ce qui concerne plus particulièrement les conditions relatives au milieu gazeux comprenant une telle hydrofluorooléfine et, notamment, son pourcentage molaire d'au moins 95% du pourcentage molaire M tel que déterminé par la formule notamment décrite dans le paragraphe [0018] du document **[2]**.

Comme également enseigné dans le document **[2]**, le gaz de dilution peut être choisi parmi l'air, et avantageusement l'air sec, l'azote, l'oxygène, le dioxyde de carbone, et les mélanges de ces différents gaz.

Ce milieu gazeux peut également comprendre une hydrofluorooléfine et une fluorocétone, seules ou en mélange avec un gaz de dilution, comme décrit dans le document US 2014/0233159, référencé **[3]** ci-après.

Comme déjà mentionné précédemment, la fluorocétone est plus particulièrement une cétone à chaîne carbonée à cinq atomes de carbone, de préférence totalement substituée par du fluor, tandis que l'hydrofluorooléfine est plus particulièrement un alcène fluoré de chaîne carbonée à trois atomes de carbone, de préférence de type C₃H₂F₄ ou C₃HF₅.

Avantageusement, la fluorocétone est la décafluoro-2-méthylbutan-3-one C5K tandis que l'hydrofluorooléfine peut être choisie parmi le *trans*-1,3,3,3-tétrafluoro-1-propène (HFO-1234ze), le 2,3,3,3-tétrafluoro-1-propène (HFO-1234yf) et le 1,2,2,5-pentafluoro-1-propène (HFO-1225ye).

On pourra ainsi se reporter au document **[3]** pour ce qui concerne plus particulièrement les conditions relatives au milieu gazeux comprenant le mélange d'une fluorocétone, une hydrofluorooléfine et un gaz de dilution et, notamment, les valeurs de pressions relatives telles que déterminées par la formule mentionnée au paragraphe [0020] du document **[3]**.

Comme également enseigné dans le document **[3]**, le gaz de dilution peut être choisi parmi l'air, l'azote, l'oxygène, le dioxyde de carbone ou un mélange de ces gaz.

Ce milieu gazeux peut également comprendre un fluoronitrile, seul ou en mélange avec un gaz de dilution, comme décrit dans les documents WO 2013/151741 et WO 2014/037566, respectivement référencés **[4]** et **[5]** ci-après.

Le fluoronitrile peut notamment être le 2,3,3,3-tétrafluoro-2-trifluorométhylpropanenitrile, encore appelé heptafluoroisobutyronitrile, ou encore le 2,3,3,3-tétrafluoro-2-(trifluorométhoxy)propanenitrile.

On pourra avantageusement se reporter aux documents **[4]** et **[5]** pour les conditions de mise en oeuvre préférentielles de ce milieu gazeux mettant en oeuvre de tels fluoronitriles.

La couche continue constituée d'atomes de fluor qui revêt la surface dudit au moins un composant électriquement isolant peut être obtenue par un procédé de traitement de surface qui comprend au moins une étape de fluoration, notée F, dudit au moins un composant électriquement isolant.

Si le procédé de traitement de surface par fluoration est connu à ce jour pour diminuer la perméabilité à un fluide, tel qu'un liquide ou un gaz, d'un matériau sur lequel ce procédé est appliqué, rien ne laissait penser qu'un tel procédé comprenant une étape de fluoration permettrait d'améliorer, de manière significative, la tenue diélectrique en surface dudit matériau.

Cette étape de fluoration F peut notamment être réalisée par la mise en contact dudit au moins un composant électriquement isolant avec un gaz fluoré sous pression.

Ce gaz fluoré peut être du fluor F₂ seul, ou bien encore être formé par un mélange de fluor F₂ avec un autre gaz tel que l'azote N₂.

On peut notamment utiliser un mélange dans lequel la proportion volumique en fluor est comprise entre 5% et 30%, la proportion volumique en azote étant, quant à elle, comprise entre 70% et 95%.

Dans un mode de réalisation particulier, le procédé de traitement de surface mis en oeuvre peut comprendre, préalablement à l'étape de fluoration F, un traitement préliminaire.

Ayant bien entendu une incidence non négligeable en termes de coût industriel, un tel traitement préliminaire est plus particulièrement mis en oeuvre dans le cas où le matériau du composant électriquement isolant comprend des renforts.

Ce traitement préliminaire comprend une étape de première fluoration, ou pré-fluoration, notée F₀, suivie d'une étape de traitement acide.

Ainsi, le procédé de traitement de surface permettant d'obtenir la couche continue constituée d'atomes de fluor comprend les étapes successives suivantes, réalisées dans cet ordre :
(a) une étape de première fluoration F₀,
(b) une étape de traitement acide, puis
(c) l'étape de fluoration F telle que décrite ci-dessus, moyennant quoi la couche continue constituée d'atomes de fluor est obtenue.

L'étape (a) de première fluoration F₀ permet le dépôt d'atomes de fluor à la surface dudit au moins un composant électriquement isolant de manière à former une première couche constituée d'atomes de fluor et de faire émerger, à la surface du matériau de ce ou ces composants électriquement isolants, les renforts, tels que les fibres et/ou les charges, par une dégradation superficielle du polymère dudit matériau.

Comme pour l'étape de fluoration F, l'étape (a) de première fluoration F₀ peut être réalisée par la mise en contact dudit au moins un composant électriquement isolant avec un gaz fluoré sous pression, le gaz fluoré étant du fluor ou du fluor en mélange avec un autre gaz tel que l'azote.

Comme précédemment mentionné pour l'étape de fluoration F, on peut utiliser, lors de l'étape de première fluoration F₀, un mélange dans lequel la proportion volumique en fluor est comprise entre 5% et 30%, la proportion volumique en azote étant, quant à elle, comprise entre 70% et 95%.

Comme indiqué précédemment, lorsque le matériau dudit au moins un composant électriquement isolant comprend des renforts, que ces renforts se présentent sous la forme de fibres et/ou de charges, cette première fluoration F₀ a tendance à faire ressortir en surface lesdits renforts. On observe donc que la première couche d'atomes de fluor obtenue à l'issue de l'étape (a) n'est pas nécessairement continue, ce qui est préjudiciable aux performances de tenue diélectrique en surface du ou de ces composants électriquement isolants.

Lorsqu'il comprend le traitement préliminaire, le procédé de traitement de surface mis en oeuvre dans le cadre de la présente invention comprend, après l'étape (a) de première fluoration F₀, l'étape (b) de traitement acide. Cette étape (b) de traitement acide permet de pallier l'inconvénient engendré par la présence de renforts dans le matériau du ou des composants électriquement isolants, en assurant l'élimination des renforts, sous forme de fibres et/ou de charges, faisant saillie au niveau de la surface de ce ou ces composants électriquement isolants, après la réalisation de l'étape (a) de première fluoration F₀.

Cette étape (b) de traitement acide peut notamment être réalisée par la mise en contact dudit au moins un composant électriquement isolant avec une solution aqueuse.

Une telle solution aqueuse peut avantageusement comprendre de l'acide fluorhydrique HF, en particulier lorsque les fibres sont des fibres de verre et/ou les charges sont des charges de silice, l'acide fluorhydrique étant capable de dissoudre le dioxyde de silicium de manière générale, et le verre en particulier.

Dans une variante particulière de l'invention, ce traitement préliminaire peut, en outre, comprendre des étapes complémentaires de lavage et de séchage, afin d'éliminer toute trace résiduelle provenant de l'étape (b) de traitement acide.

Dans ce cas, le procédé de traitement de surface comprend, entre l'étape (b) de traitement acide et l'étape (c) de fluoration F, les étapes successives suivantes, réalisées dans cet ordre :
(b₁) une étape de lavage, puis
(b₂) une étape de séchage.

Avantageusement, l'étape (b₁) de lavage peut être réalisée par un lavage à l'eau et l'étape (b₂) de séchage peut être réalisée par un séchage sous vide.

Les étapes (a) de première fluoration F₀ et (b) de traitement acide suivies, le cas échéant, par les étapes (b₁) de lavage et (b₂) de séchage, peuvent bien entendu s'inscrire dans les processus actuels de fabrication des appareils électriques conformes à l'invention, mais ne sont pas sans incidence sur le coût global desdits processus.

Bien qu'elles puissent être mises en oeuvre quelle que soit la composition du matériau dudit au moins un composant électriquement isolant, ces étapes (a), (b) et, le cas échant, (b₁) et (b₂) sont, dans un souci d'économie, préférentiellement mises en oeuvre pour un matériau comprenant des renforts, sous forme de fibres et/ou de charges, et plus particulièrement des fibres de verre et/ou des charges de silice, dans une proportion massique supérieure ou égale à 20% et, avantageusement, supérieure ou égale à 30%, de la masse totale dudit matériau.

Comme on le verra dans les exemples ci-après, une amélioration nette de la tenue diélectrique en surface est atteinte pour une proportion massique en fibres de verre atteignant 50% de la masse totale du matériau.

Conformément à l'invention, l'appareil électrique qui vient d'être décrit peut être un appareil électrique de coupure moyenne tension, mais également basse tension.

Un tel appareil électrique peut notamment être un transformateur électrique à isolation gazeuse comme, par exemple, un transformateur d'alimentation ou un transformateur de mesure. L'appareil électrique peut également être une ligne à isolation gazeuse, aérienne ou souterraine, ou un jeu de barres pour le transport ou la distribution de l'électricité. Enfin, il peut aussi être un appareil électrique de connexion/déconnexion (aussi appelé appareil de coupure) comme, par exemple, un disjoncteur, un interrupteur, un sectionneur, un combiné interrupteur-fusibles, un sectionneur de mise à la terre ou un contacteur.

Le ou les composants électriquement isolants plus particulièrement visés dans le cadre de la présente invention peuvent notamment être les pièces de traversée de courant entourant les conducteurs (en anglais, "bushing"), la pièce entourant le fusible également dénommée "puits fusible", l'arbre porte-couteaux également dénommé "arbre porte-contacts" (en anglais, "mobile shaft"), la poutre (en anglais, "insulator") et, bien entendu, l'enceinte étanche comprenant notamment le milieu gazeux assurant l'isolation électrique et l'extinction des arcs électriques susceptibles de se former au sein de ladite enceinte étanche.

La présente invention se rapporte, en second lieu, à un procédé pour améliorer l'isolation électrique d'un appareil électrique, cet appareil électrique comprenant une enceinte étanche dans laquelle se trouvent au moins un composant électriquement isolant, des composants électriques ainsi qu'un milieu gazeux assurant l'isolation électrique et l'extinction des arcs électriques susceptibles de se former au sein de cette enceinte étanche.

Les caractéristiques avantageuses décrites ci-dessus pour l'appareil électrique, et qui se rapportent au matériau formant le ou les composants électriquement isolants (polymères et/ou renforts) ou encore à la composition du milieu gazeux assurant l'isolation électrique et l'extinction des arcs électriques susceptibles de se former au sein de ladite enceinte étanche, peuvent être prises seules ou en combinaison.

Selon l'invention, ce procédé comprend au moins une étape de fluoration F dudit au moins un composant électriquement isolant, moyennant quoi une couche continue constituée d'atomes de fluor est déposée à la surface dudit au moins un composant électriquement isolant. Cette étape de fluoration F est, bien entendu, mise en oeuvre avant l'agencement dudit au moins un composant électriquement isolant dans l'enceinte étanche de l'appareil électrique.

Les caractéristiques de cette étape de fluoration F de ce procédé selon l'invention sont telles que précédemment décrites à propos de l'appareil électrique, celles-ci pouvant être prises seules ou en combinaison.

Dans un mode de réalisation particulier du procédé selon l'invention, notamment dans le cas où le matériau dudit au moins un composant électriquement isolant comprend des renforts, sous forme de fibres et/ou de charges, notamment à base de dioxyde de silicium, ce procédé peut en outre comprendre, préalablement à l'étape de fluoration F, un traitement préliminaire.

Comme décrit ci-dessus à propos de l'appareil électrique, ce traitement préliminaire peut avantageusement comprendre une étape de première fluoration F₀, ou pré-fluoration, suivie d'une étape de traitement acide.

Dans cette dernière hypothèse, le procédé pour améliorer l'isolation électrique d'un appareil électrique comprend les étapes successives suivantes, réalisées dans cet ordre :
(a) une étape de première fluoration F₀,
(b) une étape de traitement acide, puis
(c) l'étape de fluoration F telle que décrite ci-dessus, moyennant quoi la couche continue constituée d'atomes de fluor est obtenue.

Comme décrit ci-dessus, entre l'étape (b) de traitement acide et l'étape (c) de fluoration F, le procédé selon l'invention peut également comprendre les étapes successives suivantes, réalisées dans cet ordre :
(b₁) une étape de lavage, puis
(b₂) une étape de séchage.

On se reportera avantageusement à ce qui a été décrit ci-avant à propos de l'appareil électrique pour ce qui concerne les caractéristiques avantageuses des étapes (a), (b) et, le cas échéant, (b₁) et (b₂), de telles caractéristiques pouvant être prises seules ou en combinaison.

D'autres avantages et caractéristiques de la présente invention ressortiront plus clairement de la description qui suit et qui se rapporte à des modes de réalisation particuliers de l'invention, le premier mode de réalisation ne comprenant qu'une étape de fluoration F et le second comprenant un traitement préliminaire puis une étape de fluoration F.

Bien entendu, ces modes de réalisation particuliers de l'invention sont donnés à titre illustratif et ne constituent en aucune manière une limitation de son objet.

### EXPOSÉ DÉTAILLÉ DE MODES DE RÉALISATION PARTICULIERS

### Mise en oeuvre d'une étape de fluoration F, en l'absence de traitement préliminaire

Des essais en choc de foudre ont été réalisés pour évaluer la tenue diélectrique en surface de deux séries de composants électriquement isolants, les premiers étant constitués en polyépoxyde (noté "EP") et les seconds étant réalisés en un matériau comprenant 20% en masse, par rapport à la masse totale dudit matériau, de fibres de verre (noté "FV") dans du polybutylène téréphtalate (noté "PBT").

Une partie de ces composants électriquement isolants n'a été soumise à aucune étape de fluoration F : il s'agit de composants électriquement isolants dits "de référence".

Les autres composants électriquement isolants ont été soumis à une étape de fluoration F. Cette étape de fluoration F a été réalisée par la mise en contact, pendant 30 min, des composants électriquement isolants avec un mélange gazeux à une pression totale de 0,1 MPa et constitué de 12,5% en volume de fluor F₂ et 87,5% en volume d'azote N₂. Cette étape de fluoration F a été conduite à différentes températures de fluoration, à 25°C, à 55°C et à 85°C.

Les essais en choc de foudre ont ensuite été conduits avec les composants électriquement isolants de référence et les composants électriquement isolants soumis à l'étape de fluoration F dans un milieu gazeux formé par un mélange, à 20°C, de C5K et d'air sec, dans des proportions respectives de 0,16 bar et 1,14 bar.

Les valeurs de tenue diélectrique en surface (en kV) telles qu'obtenues à l'issue de ces essais en choc de foudre sont rassemblées dans le Tableau 1 ci-dessous.

**Tableau 1**

| Matériau | Pas de fluoration F (kV) | Fluoration F à 25°C (kV) | Fluoration F à 55°C (kV) | Fluoration F à 85°C (kV) |
|---|---|---|---|---|
| EP | 42,8 | 51,6 | 50,4 | 49,9 |
| PBT + FV (20%) | 42,0 | 45,1 | 43,2 | 43,7 |

Les résultats du Tableau 1 montrent que l'on obtient une amélioration significative de la tenue diélectrique en surface des composants électriquement isolants soumis à une étape de fluoration F, par rapport à celle des composants électriquement isolants de référence.

Cette amélioration est d'autant plus marquée que la température de fluoration est proche de la température ambiante. Dans le cas des composants électriquement isolants en polyépoxyde, cette amélioration est d'au moins 15% à 85°C et atteint même 20% lorsque la température de fluoration est de 25°C, par rapport au composant électriquement isolant en polyépoxyde de référence.

On observe que l'amélioration de la tenue diélectrique en surface est un peu moins marquée, dans le cas où le matériau des composants électriquement isolants comprend des fibres de verre, dans une teneur massique de 20%.

Des essais en choc de foudre similaires conduits avec, d'une part, ces mêmes composants électriquement isolants de référence et, d'autre part, ceux soumis à l'étape de fluoration F, mais dans de l'air ambiant à la place du mélange de C5K et d'air sec, corroborent les observations indiquées ci-dessus.

### Mise en oeuvre d'un traitement préliminaire suivi d'une étape de fluoration F

Des essais en choc de foudre ont été réalisés pour évaluer la tenue diélectrique en surface de composants électriquement isolants réalisés en un matériau comprenant 50% en masse, par rapport à la masse totale dudit matériau, de fibres de verre (noté "FV") dans du polyphtalamide (noté "PPA").

Comme dans les essais précédents, une partie de ces composants électriquement isolants, dits "de référence", n'a été soumise à aucune étape de fluoration F.

Les autres composants électriquement isolants ont été soumis à un traitement préliminaire puis à une étape de fluoration F, ce traitement préliminaire comprenant les étapes successives suivantes, réalisées dans cet ordre :
- une étape de première fluoration F₀,
- une étape de traitement acide,
- une étape de lavage, puis
- une étape de séchage.

L'étape de première fluoration F₀ a été réalisée par la mise en contact, pendant 1 h, des composants électriquement isolants avec 0,02 MPa de fluor F₂ à 25°C.

L'étape de traitement acide a été réalisée par le placement, pendant 15 min et à une température de 25°C, des composants électriquement isolants ayant été soumis à l'étape de première fluoration F₀ ci-dessus, dans une solution aqueuse d'acide fluorhydrique HF, HF représentant 40% en mol de ladite solution aqueuse.

L'étape de lavage a été réalisée par un trempage sous agitation dans de l'eau, pendant 48 h, des composants électriquement isolants tels qu'issus de l'étape de traitement acide.

L'étape de séchage a été réalisée par le placement des composants électriquement isolants lavés à l'eau dans un dispositif de séchage sous vide, à 50°C, pendant 16 h.

L'étape de fluoration F a ensuite été réalisée par la mise en contact, pendant 15 min, des composants électriquement isolants séchés avec du fluor F₂, à 25°C et à une pression de 0,01 MPa.

Les essais en choc de foudre ont ensuite été conduits dans l'air à pression atmosphérique avec les composants électriquement isolants de référence et les composants électriquement isolants soumis au traitement préliminaire puis à l'étape de fluoration F.

Les valeurs de tenue diélectrique en surface (en kV) telles qu'obtenues à l'issue de ces essais en choc de foudre sont rassemblées dans le Tableau 2 ci-dessous.

**Tableau 2**

| Matériau | Pas de fluoration F (kV) | Fluoration F, sans traitement préliminaire (kV) | Fluoration F, avec traitement préliminaire (kV) |
|---|---|---|---|
| PPA + FV (50%) | 53,1 | 50,1 | 63,1 |

Les résultats du Tableau 2 montrent que l'on obtient une amélioration de plus de 18% de la tenue diélectrique en surface des composants électriquement isolants lorsque ces derniers ont été soumis à un traitement préliminaire, puis à une étape de fluoration F, par rapport à celle des composants électriquement isolants de référence qui n'ont été soumis à aucun traitement.

Les résultats du Tableau 2 mettent également bien en évidence que, lorsque le matériau des composant électriquement isolants comprend une proportion massique non négligeable de fibres (dans le cas présent, 50% de fibres de verre), le traitement préliminaire, préalable à l'étape de fluoration F, est indispensable pour améliorer les performances desdits composants électriquement isolants en termes de tenue diélectrique en surface.

### BIBLIOGRAPHIE

**[1]** US 2014/0190726 A1
**[2]** US 2014/0196932 A1
**[3]** US 2014/0233159 A1
**[4]** WO 2013/151741 A1
**[5]** WO 2014/037566 A1

## Revendications

1. Appareil électrique comprenant une enceinte étanche dans laquelle se trouvent, au moins un composant électriquement isolant, des composants électriques ainsi qu'un milieu gazeux assurant l'isolation électrique et l'extinction des arcs électriques susceptibles de se former au sein de cette enceinte étanche, **caractérisé en ce que** la surface dudit au moins un composant électriquement isolant est revêtue d'une couche continue constituée d'atomes de fluor.

2. Appareil électrique selon la revendication 1, dans lequel ledit au moins un composant électriquement isolant est réalisé en un matériau comprenant au moins un polymère choisi parmi un polymère thermodurcissable, un polymère thermoplastique et un élastomère, ledit matériau pouvant, en outre, comprendre des renforts.

3. Appareil électrique selon la revendication 2, dans lequel le polymère thermodurcissable est choisi parmi les polyépoxydes, les polyesters insaturés et les polyuréthanes.

4. Appareil électrique selon la revendication 2, dans lequel le polymère thermoplastique est choisi parmi les polyesters linéaires, les polyamides, les polycarbonates et les polyacétals.

5. Appareil électrique selon la revendication 2, dans lequel le l'élastomère est choisi parmi les silicones et les terpolymères éthylène-propylène-diène EPDM.

6. Appareil électrique selon l'une quelconque des revendications 2 à 5, dans lequel les renforts sont choisis parmi des fibres, minérales ou organiques, et/ou des charges, minérales ou organiques, les fibres minérales étant avantageusement des fibres de verre et les charges minérales étant avantageusement des charges de silice.

7. Appareil électrique selon l'une quelconque des revendications 1 à 6, dans lequel le milieu gazeux est choisi parmi l'air, le dioxyde de carbone CO₂, le diazote N₂ et un mélange gazeux comprenant au moins un composé choisi parmi une fluorocétone, une hydrofluorooléfine et un fluoronitrile, la fluorocétone étant préférentiellement la décafluoro-2-méthylbutan-3-one.

8. Appareil électrique selon l'une quelconque des revendications 1 à 7, dans lequel la couche continue constituée d'atomes de fluor est obtenue par un procédé de traitement de surface qui comprend au moins une étape de fluoration F dudit au moins un composant électriquement isolant.

9. Appareil électrique selon la revendication 8, dans lequel, lorsque le matériau comprend des renforts, notamment dans une proportion massique supérieure ou égale à 20% de la masse totale du matériau, le procédé de traitement de surface comprend les étapes successives suivantes, réalisées dans cet ordre :
(a) une étape de première fluoration F₀,
(b) une étape de traitement acide, puis
(c) l'étape de fluoration F, moyennant quoi la couche continue constituée d'atomes de fluor est obtenue.

10. Appareil électrique selon la revendication 8 ou 9, dans lequel l'étape (c) de fluoration F et, le cas échéant, l'étape (a) de première fluoration F₀, sont réalisées par la mise en contact dudit au moins un composant électriquement isolant avec un gaz fluoré sous pression, le gaz fluoré étant du fluor ou du fluor en mélange avec un autre gaz tel que l'azote.

11. Appareil électrique selon la revendication 9 ou 10, dans lequel l'étape (b) de traitement acide est réalisée par la mise en contact dudit au moins un composant électriquement isolant avec une solution aqueuse comprenant de l'acide fluorhydrique.

12. Appareil électrique selon l'une quelconque des revendications 8 à 11, dans lequel le procédé de traitement de surface comprend, en outre, entre l'étape (b) de traitement acide et l'étape (c) de fluoration F, les étapes successives suivantes, réalisées dans cet ordre :
(b₁) une étape de lavage, avantageusement réalisée par un lavage à l'eau, puis
(b₂) une étape de séchage, avantageusement réalisée par un séchage sous vide.

13. Appareil électrique selon l'une quelconque des revendications 1 à 12, cet appareil électrique étant un appareil électrique moyenne ou basse tension, tel qu'un transformateur électrique à isolation gazeuse, une ligne à isolation gazeuse pour le transport ou la distribution de l'électricité, ou un appareil électrique de connexion/déconnexion.

14. Procédé pour améliorer l'isolation électrique d'un appareil électrique comprenant une enceinte étanche dans laquelle se trouvent au moins un composant électriquement isolant, des composants électriques ainsi qu'un milieu gazeux assurant l'isolation électrique et l'extinction des arcs électriques susceptibles de se former au sein de cette enceinte étanche, ledit procédé comprenant au moins une étape de fluoration F dudit au moins un composant électriquement isolant, moyennant quoi une couche continue constituée d'atomes de fluor est déposée à la surface dudit au moins un composant électriquement isolant, cette étape de fluoration F étant mise en oeuvre avant l'agencement dudit au moins un composant électriquement isolant dans ladite enceinte étanche.

15. Procédé selon la revendication 14, dans lequel, lorsque le matériau comprend des renforts, notamment dans une proportion massique supérieure ou égale à 20% en masse de la masse totale du matériau, ce procédé comprend les étapes successives suivantes, réalisées dans cet ordre :
(a) une étape de première fluoration F₀,
b) une étape de traitement acide, puis
(c) l'étape de fluoration F, moyennant quoi la couche continue et formée d'atomes de fluor qui revêt la surface dudit au moins un composant électriquement isolant est obtenue.

## Patentansprüche

1. Elektrische Einrichtung, umfassend ein dichtes Gehäuse, in welchem sich zumindest ein elektrisch isolierendes Bauteil, elektrische Bauteile, sowie ein gasförmiges Medium zur elektrischen Isolierung und zur Löschung der Lichtbögen, die sich im Inneren dieses dichten Gehäuses bilden können, befinden, **dadurch gekennzeichnet, dass** die Oberfläche des zumindest einen elektrisch isolierenden Bauteils mit einer aus Fluoratomen bestehenden, durchgehenden Schicht überzogen ist.

2. Elektrische Einrichtung nach Anspruch 1, wobei das zumindest eine elektrisch isolierende Bauteil aus einem Material gebildet ist, das zumindest ein Polymer umfasst, welches aus einem duroplastischen Polymer, einem thermoplastischen Polymer und einem Elastomer ausgewählt ist, wobei das Material weiterhin Verstärkungsstoffe umfassen kann.

3. Elektrische Einrichtung nach Anspruch 2, wobei das duroplastische Polymer aus Polyepoxiden, ungesättigten Polyestern und Polyurethanen ausgewählt ist.

4. Elektrische Einrichtung nach Anspruch 2, wobei das thermoplastische Polymer aus linearen Polyestern, Polyamiden, Polycarbonaten und Polyacetalen ausgewählt ist.

5. Elektrische Einrichtung nach Anspruch 2, wobei das Elastomer aus Silikonen und Ethylen-Propylen-Dien-Terpolymeren (EPDM) ausgewählt ist.

6. Elektrische Einrichtung nach einem der Ansprüche 2 bis 5, wobei die Verstärkungsstoffe aus mineralischen oder organischen Fasern und/oder aus mineralischen oder organischen Füllstoffen ausgewählt sind, wobei es sich bei den mineralischen Fasern vorteilhafterweise um Glasfasern und bei den mineralischen Füllstoffen vorteilhafterweise um Siliciumdioxidfüllstoffe handelt.

7. Elektrische Einrichtung nach einem der Ansprüche 1 bis 6, wobei das gasförmige Medium aus Luft, Kohlendioxid CO₂, Distickstoff N₂ und einem Gasgemisch umfassend zumindest einen Bestandteil, ausgewählt aus einem Fluorketon, einem Hydrofluorolefin und einem Fluornitril, ausgewählt ist, wobei es sich bei dem Fluorketon vorzugsweise um Dekafluor-2-methylbutan-3-on handelt.

8. Elektrische Einrichtung nach einem der Ansprüche 1 bis 7, wobei die aus Fluoratomen bestehende, durchgehende Schicht durch ein Oberflächenbehandlungsverfahren erhalten ist, das zumindest einen Fluorierungsschritt F des zumindest einen elektrisch isolierenden Bauteils umfasst.

9. Elektrische Einrichtung nach Anspruch 8, wobei, wenn das Material Verstärkungsstoffe, insbesondere in einem Masseverhältnis von größer oder gleich 20 % der Gesamtmasse des Materials, umfasst, das Oberflächenbehandlungsverfahren die folgenden, aufeinanderfolgenden Schritte umfasst, und zwar in der hier genannten Reihenfolge:
(a) einen Schritt der ersten Fluorierung F_{O},
(b) einen Schritt der Säurebehandlung, und anschließend
(c) den Schritt der Fluorierung F, wodurch die aus Fluoratomen bestehende, durchgehende Schicht erhalten wird.

10. Elektrische Einrichtung nach Anspruch 8 oder 9, wobei der Schritt (c) der Fluorierung F und gegebenenfalls der Schritt (a) der ersten Fluorierung F_{O} dadurch erfolgt, dass das zumindest eine elektrisch isolierende Bauteil mit einem unter Druck stehenden, fluorierten Gas in Kontakt gebracht wird, wobei es sich bei dem fluorierten Gas um Fluor oder um ein Gemisch aus Fluor und einem anderen Gas, beispielsweise Stickstoff, handelt.

11. Elektrische Einrichtung nach Anspruch 9 oder 10, wobei der Schritt (b) der Säurebehandlung dadurch erfolgt, dass das zumindest eine elektrisch isolierende Bauteil mit einer Fluorwasserstoffsäure enthaltenden, wässrigen Lösung in Kontakt gebracht wird.

12. Elektrische Einrichtung nach einem der Ansprüche 8 bis 11, wobei das Oberflächenbehandlungsverfahren zwischen dem Schritt (b) der Säurebehandlung und dem Schritt (c) der Fluorierung F weiterhin die folgenden, aufeinanderfolgenden Schritte umfasst, und zwar in der hier genannten Reihenfolge:
(b₁) einen Waschschritt, der vorteilhafterweise durch Waschen mit Wasser erfolgt, und anschließend
(b₂) einen Trocknungsschritt, der vorteilhafterweise durch Vakuumtrocknung erfolgt.

13. Elektrische Einrichtung nach einem der Ansprüche 1 bis 12, wobei es sich bei der elektrischen Einrichtung um eine elektrische Einrichtung im Mittel- oder Niederspannungsbereich, wie beispielsweise um einen gasisolierten, elektrischen Transformator, eine gasisolierte Leitung für den Transport und die Verteilung von Elektrizität, oder um eine elektrische Verbindungs-/Trennungseinrichtung handelt.

14. Verfahren zur Verbesserung der elektrischen Isolierung einer elektrischen Einrichtung, die ein dichtes Gehäuse umfasst, in welchem sich zumindest ein elektrisch isolierendes Bauteil, elektrische Bauteile, sowie ein gasförmiges Medium zur elektrischen Isolierung und zur Löschung der Lichtbögen, die sich im Inneren dieses dichten Gehäuses bilden können, befinden, wobei das Verfahren zumindest einen Fluorierungsschritt F des zumindest einen elektrisch isolierenden Bauteils umfasst, wodurch eine aus Fluoratomen bestehende, durchgehende Schicht auf die Oberfläche des zumindest einen elektrisch isolierenden Bauteils aufgebracht wird, wobei dieser Schritt der Fluorierung F vor der Anordnung des zumindest einen elektrisch isolierenden Bauteils in dem dichten Gehäuse realisiert wird.

15. Verfahren nach Anspruch 14, wobei, wenn das Material Verstärkungsstoffe, insbesondere in einem Masseverhältnis von größer oder gleich 20 Masse-% der Gesamtmasse des Materials, umfasst, das Verfahren die folgenden, aufeinanderfolgenden Schritte umfasst, und zwar in der hier genannten Reihenfolge:
(a) einen Schritt der ersten Fluorierung F_{O},
(b) einen Schritt der Säurebehandlung, und anschließend
(c) den Schritt der Fluorierung F, wodurch die aus Fluoratomen gebildete, durchgehende Schicht, mit der das zumindest eine elektrisch isolierende Bauteil überzogen ist, erhalten wird.

## Claims

1. An electrical apparatus comprising a sealed enclosure in which are located at least one electrically insulating component, electrical components, as well as a gas medium providing for electrical insulation and extinction of electric arcs likely to be formed within this sealed enclosure, **characterized in that** the surface of said at least one electrically insulating component is coated with a continuous layer consisting of fluorine atoms.

2. The electrical apparatus according to claim 1, wherein said at least one electrically insulating component is made of a material comprising at least one polymer chosen from a thermosetting polymer, a thermoplastic polymer and an elastomer, and said material can further comprise reinforcements.

3. The electrical apparatus according to claim 2, wherein the thermosetting polymer is chosen from polyepoxides, unsaturated polyesters and polyurethanes.

4. The electrical apparatus according to claim 2, wherein the thermoplastic polymer is chosen from linear polyesters, polyamides, polycarbonates and polyacetals.

5. The electrical apparatus according to claim 2, wherein the elastomer is chosen from silicones and ethylene-propylene-diene EPDM terpolymers.

6. The electrical apparatus according to any of claims 2 to 5, wherein the reinforcements are chosen from mineral or organic fibres and/or mineral or organic fillers, the mineral fibres being advantageously glass fibres and the mineral fillers being advantageously silica fillers.

7. The electrical apparatus according to any of claims 1 to 6, wherein the gas medium is chosen from air, carbon dioxide CO₂, dinitrogen N₂ and a gas mixture comprising at least one compound chosen from a fluoroketone, a hydrofluoroolefin and a fluoronitrile, the fluoroketone being preferentially decafluoro-2-methylbutan-3-one.

8. The electrical apparatus according to any of claims 1 to 7, wherein the continuous layer consisting of fluorine atoms is obtained by a surface treatment method which comprises at least one fluorination F step of said at least one electrically insulating component.

9. The electrical apparatus according to claim 8, wherein, when the material comprises reinforcements, in particular in a mass proportion higher than or equal to 20 % of the total mass of the material, the surface treatment method comprises the following successive steps, made in this order:
(a) a first fluorination F₀ step,
(b) an acid treatment step, and then
(c) the fluorination F step, whereby the continuous layer consisting of fluorine atoms is obtained.

10. The electrical apparatus according to claim 8 or 9, wherein the fluorination F step (c) and, optionally, the first fluorination F₀ step (a) are made by contacting said at least one electrically insulating component with a pressurized fluorinated gas, the fluorinated gas being fluorine or fluorine in mixture with another gas as nitrogen.

11. The electrical apparatus according to claim 9 or 10, wherein the acid treatment step (b) is made by contacting said at least one electrically insulating component with an aqueous solution comprising hydrofluoric acid.

12. The electrical apparatus according to any of claims 8 to 11, wherein the surface treatment method further comprises, between the acid treatment step (b) and the fluorination F step (c), the following successive steps, made in this order:
(b₁) a washing step, advantageously made by a water washing, and then
(b₂) a drying step, advantageously made by a vacuum drying.

13. The electrical apparatus according to any of claims 1 to 12, this electrical apparatus being a medium or low voltage electrical apparatus, such as a gas insulation electric transformer, a gas insulation line for transporting or distributing electricity, or a connection/disconnection electrical apparatus.

14. A method for improving the electrical insulation of an electrical apparatus comprising a sealed enclosure in which are located at least one electrically insulating component, electrical components as well as a gas medium providing for electrical insulation and extinction of electric arcs likely to be formed within this sealed enclosure, said method comprising at least one fluorination F step of said at least one electrically insulating component, whereby a continuous layer consisting of fluorine atoms is deposited at the surface of said at least one electrically insulating component, this fluorination F step being implemented before arranging said at least one electrically insulating component in said sealed enclosure.

15. The method according to claim 14, wherein, when the material comprises reinforcements, in particular in a mass proportion higher than or equal to 20 % by mass of the total mass of the material, this method comprises the following successive steps, made in this order:
(a) a first fluorination F₀ step,
b) an acid treatment step, and then
(c) the fluorination F step, whereby the continuous layer formed by fluorine atoms which coats the surface of said at least one electrically insulating component is obtained.
